# EUROPÄISCHE PATENTSCHRIFT

(11) **EP 4 346 380 B1**
(45) Veröffentlichungstag und Bekanntmachung des Hinweises auf die Patenterteilung: **12.02.2025**
(21) Anmeldenummer: 22730441.7
(22) Anmeldetag: 24.05.2022
(51) Int. Cl.: A01G 23/081

(54) **VORRICHTUNG ZUR HOLZERNTE**
DEVICE FOR TIMBER HARVESTING
DISPOSITIF POUR LA RÉCOLTE DU BOIS

(30) Priorität: 02.06.2021 AT 504442021
(43) Veröffentlichungstag der Anmeldung: 10.04.2024
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL
(86) Internationale Anmeldenummer: PCT/EP2022/064011
(87) Internationale Veröffentlichungsnummer: WO 2022/253632

(56) Entgegenhaltungen:
- EP-A1- 3 097 772
- WO-A1-2011/078673
- CA-A1- 2 650 748
- IT-A1- 201800 007 247

## Beschreibung

Die Erfindung betrifft eine Vorrichtung zur Holzernte mit einem hydraulisch gesteuerten Fällkopf, der am Auslegerarm eines Fahrzeuges befestigbar ist und eine Greifer- und Sägeeinheit sowie eine Kippvorrichtung umfasst, wobei die Greifer- und Sägeeinheit zumindest ein durch einen ersten Hydraulikzylinder betätigbares Greiferpaar zweier zwischen einem Öffnungs- und Schließzustand schwenkbarer Greiferarme für das Erntegut und ein durch einen zweiten Hydraulikzylinder ausschwenkbares Schneidelement zum Durchtrennen des Ernteguts aufweist, und mithilfe der durch einen dritten Hydraulikzylinder betätigbaren Kippvorrichtung von einer Ablagestellung in eine Schneidstellung für das Erntegut schwenkbar ist, wobei der erste Hydraulikzylinder mit einer ersten Hydraulikleitung zum Öffnen der Greiferarme sowie mit einer zweiten Hydraulikleitung zum Schließen der Greiferarme verbunden ist, gemäß dem Oberbegriff von Anspruch 1.

Eine gattungsgemäße Vorrichtung wurde in der WO 2011/078673 A1 beschrieben. Weitere Vorrichtungen zur Holzernte wurden in der IT 2018 000 7247 A1, EP 3097772 A1 und der CA 2650748 A1 beschrieben. Vorrichtungen der genannten Art werden für die Holzernte verwendet, wobei eine Bedienperson vom Fahrzeug aus einen Auslegerarm so steuert, dass an einer Greifer- und Sägeeinheit angeordnete Greiferarme das Erntegut wie beispielsweise einen Baumstamm umfassen, wobei in weiterer Folge über eine entsprechende Hydraulik über die eingangs genannte zweite Hydraulikleitung und einen ersten Hydraulikzylinder ein Schließdruck auf die Greiferarme ausgeübt wird, die über eine zangenartige Bewegung den Baumstamm relativ zum Auslegerarm fixieren. Nach der Fixierung des Baumstammes kann das Schneidelement mithilfe eines zweiten Hydraulikzylinders so verschwenkt werden, dass der Baumstamm durchtrennt wird. Das Schneidelement ist als Kettensäge ausgeführt und in der Regel in einem Sägekasten schwenkbar gelagert, wobei es mithilfe eines im Sägekasten angeordneten Hydraulikmotors in Betrieb gesetzt und mithilfe eines hydraulisch betätigten Schwenkantriebes aus dem Sägekasten ausgeschwenkt werden kann, um einen von den Greiferarmen gehaltenen Baumstamm in einem unterhalb der Greiferarme liegenden Bereich zu durchtrennen. Nach dem Durchtrennen des Baumstammes kann die Greifer- und Sägeeinheit mithilfe der Kippvorrichtung so verschwenkt werden, dass die Greiferarme von ihrer Schneidstellung, bei der die Greiferarme im Wesentlichen horizontal orientiert sind und ihre Greiferschwenkachsen entsprechend vertikal, in eine Ablagestellung gebracht werden, in der die Greiferarme im Wesentlichen vertikal orientiert sind und ihre Greiferschwenkachsen entsprechend horizontal. Der abgetrennte Baumstamm kann in weiterer Folge durch entsprechende Ansteuerung des Auslegerarmes kontrolliert abgelegt werden, wobei über die eingangs genannte erste Hydraulikleitung und eine entsprechend rückstellende Bewegung des ersten Hydraulikzylinders die Greiferarme geöffnet werden um den abgetrennten Baumstamm freizugeben. Mithilfe des dritten Hydraulikzylinders und der Kippvorrichtung kann die Greifer- und Sägeeinheit von ihrer Ablagestellung wieder in ihre Schneidstellung gebracht werden.

Die hydraulisch betätigten Vorgänge des Greifens und Durchtrennens sowie des Öffnens des Greifers und das Verschwenken der Kippvorrichtung werden in der Regel mithilfe von Druckfolgesteuerungen verwirklicht. Dabei werden mithilfe eines Hydrauliksequenzierventils über dieselbe Hydraulikleitung sowohl das Schließen des Greifers als auch nach dem vollständigen Schließen des Greifers die Inbetriebnahme und das Ausschwenken des Schneidelements bewerkstelligt. Mithilfe eines weiteren Hydrauliksequenzierventils werden über eine weitere Hydraulikleitung in der Ablagestellung sowohl das Öffnen des Greifers als auch nach dem vollständigen Öffnen des Greifers die Betätigung der Kippvorrichtung zum Verschwenken der Greifer- und Sägeeinheit in ihre Schneidstellung bewerkstelligt. Mithilfe eines Hydraulikventils wird zwischen den beiden Hydraulikleitungen umgeschaltet, mindestens eine Hydraulikleitung muss aber in unbeschaltenem Zustand eine Verbindung zum Hydraulikmittel-Tank aufweisen, um nach erfolgtem Schnitt ein Zurückfahren des Schneidelements zu ermöglichen. Diese Verbindung zum Hydraulikmittel-Tank hat zur Folge, dass nach dem vollständigen Öffnen des Greifers und der Betätigung der Kippvorrichtung diese nach dem Umschalten in den unbeschaltenen Zustand, zum Beispiel um den Fällkopf am Erntegut zu positionieren, durch die Schwerkraft wieder nach unten sinkt. Eine saubere Positionierung am Erntegut wird somit erschwert, was sich im Betrieb als nachteilig erweist.

Es besteht daher das Ziel der Erfindung darin eine Vorrichtung zur Holzernte mit einem hydraulisch gesteuerten Fällkopf zu verwirklichen, die diesen Nachteil vermeidet und eine Festlegung der Schneidstellung der Greifer- und Sägeeinheit während der Positionierung am Erntegut ermöglicht.

Diese Ziele werden durch die Merkmale von Anspruch 1 verwirklicht. Anspruch 1 bezieht sich auf eine Vorrichtung zur Holzernte mit einem hydraulisch gesteuerten Fällkopf, der am Auslegerarm eines Fahrzeuges befestigbar ist und eine Greifer- und Sägeeinheit sowie eine Kippvorrichtung umfasst, wobei die Greifer- und Sägeeinheit zumindest ein durch einen ersten Hydraulikzylinder betätigbares Greiferpaar zweier zwischen einem Öffnungs- und Schließzustand schwenkbarer Greiferarme für das Erntegut und ein durch einen zweiten Hydraulikzylinder ausschwenkbares Schneidelement zum Durchtrennen des Ernteguts aufweist, und mithilfe der durch einen dritten Hydraulikzylinder betätigbaren Kippvorrichtung von einer Ablagestellung in eine Schneidstellung für das Erntegut schwenkbar ist, wobei der erste Hydraulikzylinder mit einer ersten Hydraulikleitung zum Öffnen der Greiferarme sowie mit einer zweiten Hydraulikleitung zum Schließen der Greiferarme verbunden ist. Erfindungsgemäß wird hierbei vorgeschlagen, dass ein erstes mit einem Rückschlagventil versehenes Hydraulikventil vorgesehen ist, das eingangsseitig mit der ersten Hydraulikleitung verbunden ist, und ausgangsseitig mit einem zweiten Hydraulikventil verbunden ist, das mit dem als einfachwirkender Hydraulikzylinder ausgeführten, dritten Hydraulikzylinder verbunden ist, sowie mit einem dritten Hydraulikventil, über das das zweite Hydraulikventil mit der ersten Hydraulikleitung verbunden ist, wobei das dritte Hydraulikventil ausgelegt ist um bei Druckbeaufschlagung der ersten Hydraulikleitung zu sperren und bei Druckbeaufschlagung der zweiten Hydraulikleitung zu öffnen, und das zweite Hydraulikventil ausgelegt ist um bei Betätigung eines Schalters durch die in ihren Öffnungszustand geschwenkten Greiferarme Hydraulikmittel vom ersten Hydraulikventil zum dritten Hydraulikzylinder zu leiten, und bei fehlender Betätigung des Schalters beim Schließen der Greiferarme Hydraulikmittel vom dritten Hydraulikzylinder zum dritten Hydraulikventil zu leiten.

Falls der Greifer geöffnet werden soll, wird mithilfe der ersten Hydraulikleitung der erste Hydraulikzylinder betätigt, und der Greifer öffnet. Mithilfe des ersten Hydraulikventils wird dabei Hydraulikmittel von der ersten Hydraulikleitung zum zweiten Hydraulikventil geleitet, das aber zunächst noch sperrt, weil es erst durch Betätigung des Schalters geöffnet wird. Zudem wird Hydraulikmittel auch zum dritten Hydraulikventil geleitet, das aber ebenfalls noch sperrt, weil es erfindungsgemäß bei Druckbeaufschlagung der ersten Hydraulikleitung sperrend ist.

Erst wenn der Greifer vollständig geöffnet ist und sich somit in seinem Öffnungszustand befindet, aktiviert er über den Schalter das zweite Hydraulikventil, das somit leitend wird und Hydraulikmittel vom ersten Hydraulikventil in den dritten Hydraulikzylinder der Kippvorrichtung fließen lässt. Der dritte Hydraulikzylinder wird somit betätigt, wodurch die Kippvorrichtung die Greifer- und Sägeeinheit in ihre Schneidstellung verschwenkt.

Die Greifer- und Sägeeinheit kann in weiterer Folge am Erntegut positioniert werden. Die beiden Hydraulikleitungen sind dabei drucklos. Das dritte Hydraulikventil verbleibt dabei im sperrenden Zustand. Auch über das erste Hydraulikventil kann das Hydraulikmittel aus dem dritten Hydraulikzylinder nicht abfließen, da es mit einem Rückschlagventil versehen ist. Die Greifer- und Sägeeinheit hält somit ihre Position und ermöglicht eine genaue Positionierung am Erntegut.

Falls der Greifer geschlossen werden soll, wird mithilfe der zweiten Hydraulikleitung der erste Hydraulikzylinder betätigt, und der Greifer schließt. Das dritte Hydraulikventil wird nun geöffnet, sodass Hydraulikmittel aus dem dritten Hydraulikzylinder über das zweite Hydraulikventil und das dritte Hydraulikventil in die erste Hydraulikleitung abfließen kann, sobald das Erntegut durchtrennt wurde und mit seinem Eigengewicht die Kippvorrichtung verschwenkt, wodurch der dritte Hydraulikzylinder wieder in seine eingefahrene Position gebracht wird.

Zur Überlastsicherung für den dritten Hydraulikzylinder ist das erste Hydraulikventil vorzugsweise ausgelegt um bei Überschreiten eines ersten Grenzwertes der ausgangsseitigen Druckbeaufschlagung Hydraulikmittel vom zweiten Hydraulikventil zur ersten Hydraulikleitung zu leiten.

Des Weiteren ist ein viertes Hydraulikventil als Lasthalteventil mit einer Überlastsicherung für den ersten Hydraulikzylinder vorgesehen, das eingangsseitig mit der zweiten Hydraulikleitung und ausgangsseitig mit dem ersten Hydraulikzylinder verbunden ist, wobei das vierte Hydraulikventil ausgelegt ist um bei Überschreiten eines zweiten Grenzwertes der ausgangsseitigen Druckbeaufschlagung Hydraulikmittel vom ersten Hydraulikzylinder zur zweiten Hydraulikleitung zu leiten. Das Lasthalteventil sorgt dafür, dass der Druck im ersten Hydraulikzylinder erhalten bleibt, auch wenn die zweite Hydraulikleitung drucklos ist. Das vierte Hydraulikventil verhindert somit ein ungewolltes Öffnen des Greifers, ermöglicht aber ein Öffnen des Greifers bei drohender Überlast.

Zudem kann ein fünftes Hydraulikventil vorgesehen sein, das eingangsseitig mit der zweiten Hydraulikleitung und ausgangsseitig mit einem Hydraulikmotor und dem zweiten Hydraulikzylinder für das Schneidelement verbunden ist, wobei das fünfte Hydraulikventil ausgelegt ist um bei Überschreiten eines dritten Grenzwertes der eingangsseitigen Druckbeaufschlagung Hydraulikmittel von der zweiten Hydraulikleitung zum Hydraulikmotor und dem zweiten Hydraulikzylinder zu leiten. Der dritte Grenzwert wird so gewählt, dass das fünfte Hydraulikventil erst dann öffnet, wenn der Greifer vollständig geschlossen ist. Auf diese Weise wird auch das Schneidelement erst nach dem vollständigen Schließen des Greifers in Betrieb gesetzt. Dabei wird die Säge nach der Inbetriebnahme über den Hydraulikmotor mithilfe des zweiten Hydraulikzylinders ausgeschwenkt.

Des Weiteren wird vorgeschlagen, dass ein erster Speicher für Lecköl des Hydraulikmotors vorgesehen ist, der mit der ersten Hydraulikleitung verbunden ist. Dieser erste Speicher sammelt Lecköl des Hydraulikmotors und führt es nach der Beendigung des Sägevorganges in die erste Hydraulikleitung zurück.

Um ein Falschlaufen des Hydraulikmotors bei Druckbeaufschlagung der ersten Hydraulikleitung zu verhindern wird ein sechstes Hydraulikventil vorgeschlagen, das eingangsseitig mit der ersten Hydraulikleitung und ausgangsseitig mit dem Hydraulikmotor verbunden ist, wobei das sechste Hydraulikventil ausgelegt ist um Hydraulikmittel vom Hydraulikmotor in die erste Hydraulikleitung zu leiten und in Gegenrichtung zu sperren.

Des Weiteren wird ein zweiter Speicher für Hydraulikmittel des zweiten Hydraulikzylinders zur rückstellenden Bewegung des zweiten Hydraulikzylinders vorgeschlagen. Mithilfe des zweiten Speichers wird somit das Schneidelement nach Beendigung des Schneidvorganges wieder eingeschwenkt.

Die Erfindung wird in weiterer Folge anhand von Ausführungsbeispielen mithilfe der beiliegenden Figuren näher erläutert. Es zeigen hierbei die
Fig. 1 eine schematische Ansicht eines Fahrzeuges mit einem erfindungsgemäßen Fällkopf mit einer Greifer- und Sägeeinheit in der Schneidstellung,
Fig. 2 eine schematische Ansicht eines Fahrzeuges mit einem erfindungsgemäßen Fällkopf mit einer Greifer- und Sägeeinheit in der Ablagestellung,
Fig. 3a eine vergrößerte Ansicht des Fällkopfes in der Schneidstellung,
Fig. 3b eine vergrößerte Ansicht des Fällkopfes in der Ablagestellung,
Fig. 4a eine Darstellung der Greifer- und Sägeeinheit von oben gesehen,
Fig. 4b eine Darstellung der Greifer- und Sägeeinheit von unten gesehen, sodass das Schneidelement ersichtlich ist, und die
Fig. 5 eine mögliche Ausführungsform einer Hydraulikschaltung für einen erfindungsgemäßen Fällkopf.

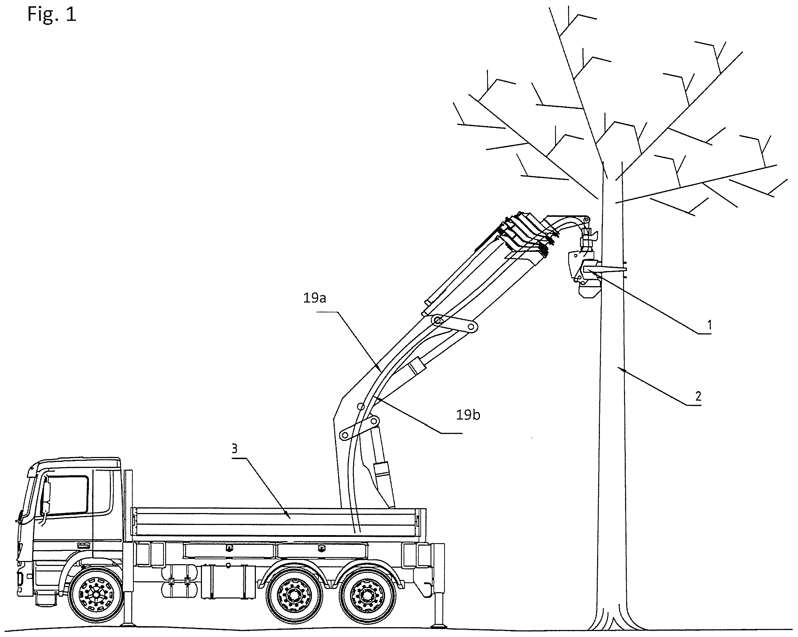

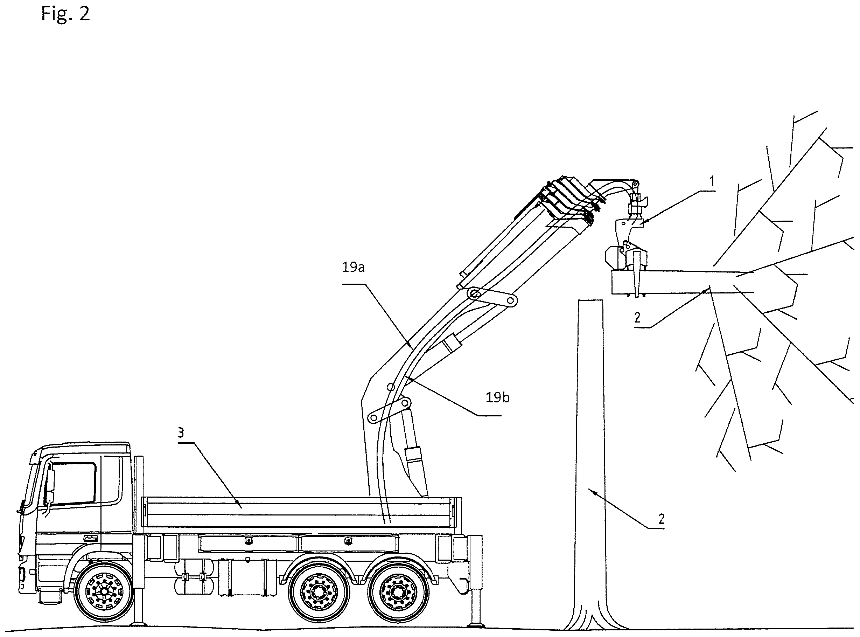

Zunächst wird auf die Fig. 1 bis 4 Bezug genommen, um die allgemeine Funktionsweise eines erfindungsgemäßen Fällkopfes zu erläutern. Die Fig. 1 zeigt dabei eine schematische Ansicht eines Fahrzeuges 3 mit einem erfindungsgemäßen Fällkopf 1 mit einer Greifer- und Sägeeinheit in der Schneidstellung, und die Fig. 2 eine schematische Ansicht des Fahrzeuges 3 mit einem erfindungsgemäßen Fällkopf 1 mit einer Greifer- und Sägeeinheit in der Ablagestellung.

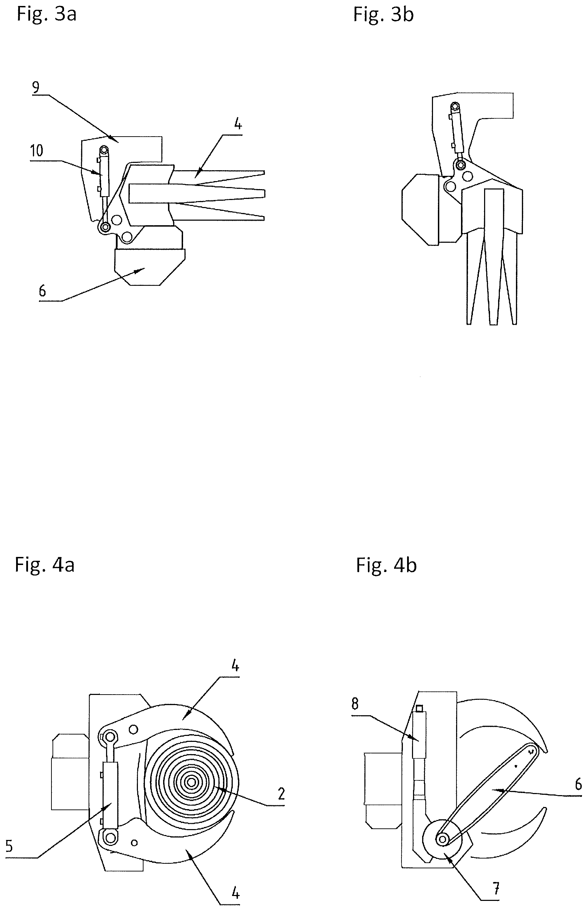

Der Fällkopf 1 ist an einem Auslegerarm des Fahrzeuges 3 befestigt, der von einer Bedienperson vom Fahrzeug 3 aus so gesteuert wird, dass an der Greifer- und Sägeeinheit angeordnete Greiferarme 4 (siehe Fig. 3) das Erntegut 2 wie beispielsweise einen Baumstamm umfassen. In weiterer Folge wird über eine entsprechende Hydraulik über die in der Fig. 1 und 2 ersichtliche zweite Hydraulikleitung 19b und einen ersten Hydraulikzylinder 5 (siehe Fig. 4a) ein Schließdruck auf die Greiferarme 4 ausgeübt, die über eine zangenartige Bewegung den Baumstamm fixieren. Nach der Fixierung des Baumstammes kann das Schneidelement 6 (siehe Fig. 4b) mithilfe eines zweiten Hydraulikzylinders 8 so verschwenkt werden, dass der Baumstamm durchtrennt wird. Das Schneidelement 6 ist als Kettensäge ausgeführt und in der Regel in einem Sägekasten schwenkbar gelagert, wobei es mithilfe eines im Sägekasten angeordneten Hydraulikmotors 7 (siehe Fig. 4b) in Betrieb gesetzt und mithilfe des zweiten Hydraulikzylinders 8 aus dem Sägekasten ausgeschwenkt werden kann, um einen von den Greiferarmen 4 gehaltenen Baumstamm in einem unterhalb der Greiferarme 4 liegenden Bereich zu durchtrennen. Nach dem Durchtrennen des Baumstammes kann die Greifer- und Sägeeinheit mithilfe einer Kippvorrichtung 9 (siehe Fig. 3) so verschwenkt werden, dass die Greiferarme 4 von ihrer Schneidstellung gemäß Fig. 3a, bei der die Greiferarme 4 im Wesentlichen horizontal orientiert sind und ihre Greiferschwenkachsen entsprechend vertikal, in eine Ablagestellung gemäß Fig. 3b gebracht werden, in der die Greiferarme 4 im Wesentlichen vertikal orientiert sind und ihre Greiferschwenkachsen entsprechend horizontal. Der abgetrennte Baumstamm kann in weiterer Folge durch entsprechende Ansteuerung des Auslegerarmes kontrolliert abgelegt werden, wobei über die in der Fig. 1 und 2 ersichtliche erste Hydraulikleitung 19a und eine entsprechend rückstellende Bewegung des ersten Hydraulikzylinders 5 die Greiferarme 4 geöffnet werden um den abgetrennten Baumstamm freizugeben. Mithilfe eines dritten Hydraulikzylinders 10 (siehe Fig. 3) und der Kippvorrichtung 9 kann die Greifer- und Sägeeinheit von ihrer Ablagestellung gemäß Fig. 3b wieder in ihre Schneidstellung gemäß Fig. 3a gebracht werden.

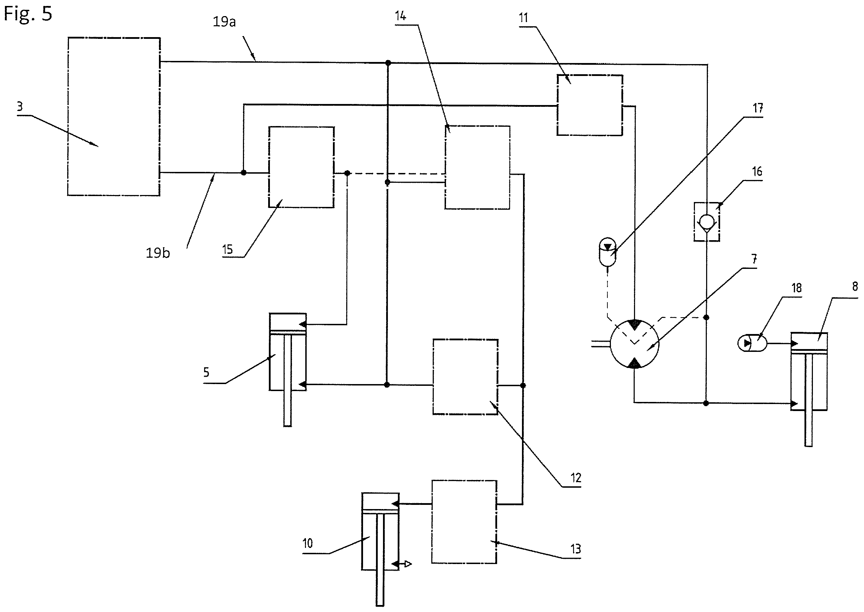

In weiterer Folge wird anhand der Fig. 5 eine mögliche Ausführungsform einer Hydraulikschaltung für einen erfindungsgemäßen Fällkopf erläutert. Falls der Greifer geöffnet werden soll, wird mithilfe der ersten Hydraulikleitung 19a der erste Hydraulikzylinder 5 betätigt, und der Greifer öffnet. Mithilfe des ersten Hydraulikventils 12 wird dabei Hydraulikmittel von der ersten Hydraulikleitung 19a zum zweiten Hydraulikventil 13 geleitet, das aber zunächst noch sperrt, weil es erst durch Betätigung eines Schalters geöffnet wird. Zudem wird Hydraulikmittel auch zum dritten Hydraulikventil 14 geleitet, das aber ebenfalls noch sperrt, weil es bei Druckbeaufschlagung der ersten Hydraulikleitung 19a sperrend ist.

Erst wenn der Greifer vollständig geöffnet ist und sich somit in seinem Öffnungszustand befindet, aktiviert er über einen Schalter das zweite Hydraulikventil 13, das somit leitend wird und Hydraulikmittel vom ersten Hydraulikventil 12 in den dritten Hydraulikzylinder 10 der Kippvorrichtung 9 fließen lässt. Der dritte Hydraulikzylinder 10 wird somit betätigt, wodurch die Kippvorrichtung 9 die Greifer- und Sägeeinheit in ihre Schneidstellung verschwenkt.

Die Greifer- und Sägeeinheit kann in weiterer Folge am Erntegut positioniert werden. Die beiden Hydraulikleitungen 19a, 19b sind dabei drucklos. Das dritte Hydraulikventil 14 verbleibt dabei im sperrenden Zustand. Auch über das erste Hydraulikventil 12 kann das Hydraulikmittel aus dem dritten Hydraulikzylinder 10 nicht abfließen, da es mit einem Rückschlagventil versehen ist. Die Greifer- und Sägeeinheit hält somit ihre Position und ermöglicht eine genaue Positionierung am Erntegut 2.

Falls der Greifer geschlossen werden soll, wird mithilfe der zweiten Hydraulikleitung 19b der erste Hydraulikzylinder 5 betätigt, und der Greifer schließt. Das dritte Hydraulikventil 14 wird nun geöffnet, sodass Hydraulikmittel aus dem dritten Hydraulikzylinder 10 über das zweite Hydraulikventil 13 und das dritte Hydraulikventil 14 in die erste Hydraulikleitung 19a abfließen kann, sobald das Erntegut 2 durchtrennt wurde und mit seinem Eigengewicht die Kippvorrichtung 9 verschwenkt, wodurch der dritte Hydraulikzylinder 10 wieder in seine eingefahrene Position gebracht wird. Das Öffnen des dritten Hydraulikventils 14 bei Druckbeaufschlagung der zweiten Hydraulikleitung 19b erfolgt mithilfe einer in der Fig. 5 durch eine gestrichelte Linie angedeuteten Steuerleitung, mit der der Druck in der zweiten Hydraulikleitung 19b nach einem als Lasthalteventil ausgeführten, vierten Hydraulikventil 15 des ersten Hydraulikzylinders 5 zur Steuerung des dritten Hydraulikventils 14 abgenommen wird.

Zur Überlastsicherung für den dritten Hydraulikzylinder 10 ist das erste Hydraulikventil 12 ferner ausgelegt um bei Überschreiten eines ersten Grenzwertes der ausgangsseitigen Druckbeaufschlagung Hydraulikmittel vom zweiten Hydraulikventil 13 zur ersten Hydraulikleitung 19a zu leiten.

Des Weiteren ist ein viertes Hydraulikventil 15 als bereits erwähntes Lasthalteventil mit einer Überlastsicherung auch für den ersten Hydraulikzylinder 5 vorgesehen, das eingangsseitig mit der zweiten Hydraulikleitung 19b und ausgangsseitig mit dem ersten Hydraulikzylinder 5 verbunden ist, wobei das vierte Hydraulikventil 15 ausgelegt ist um bei Überschreiten eines zweiten Grenzwertes der ausgangsseitigen Druckbeaufschlagung Hydraulikmittel vom ersten Hydraulikzylinder 5 zur zweiten Hydraulikleitung 19b zu leiten. Das vierte Hydraulikventil 15 verhindert somit ein ungewolltes Öffnen des Greifers, ermöglicht aber ein Öffnen des Greifers bei drohender Überlast.

Zudem ist ein fünftes Hydraulikventil 11 vorgesehen, das eingangsseitig mit der zweiten Hydraulikleitung 19b und ausgangsseitig mit dem Hydraulikmotor 7 und dem zweiten Hydraulikzylinder 8 für das Schneidelement 6 verbunden ist, wobei das fünfte Hydraulikventil 11 ausgelegt ist um bei Überschreiten eines dritten Grenzwertes der eingangsseitigen Druckbeaufschlagung Hydraulikmittel von der zweiten Hydraulikleitung 19b zum Hydraulikmotor 7 und dem zweiten Hydraulikzylinder 8 zu leiten. Der dritte Grenzwert wird so gewählt, dass das fünfte Hydraulikventil 11 erst dann öffnet, wenn der Greifer vollständig geschlossen ist. Auf diese Weise wird auch das Schneidelement 6 erst nach dem vollständigen Schließen des Greifers in Betrieb gesetzt. Dabei wird die Säge nach der Inbetriebnahme über den Hydraulikmotor 7 mithilfe des zweiten Hydraulikzylinders 8 ausgeschwenkt.

Des Weiteren ist ein erster Speicher 17 für Lecköl des Hydraulikmotors 7 vorgesehen, der mit der ersten Hydraulikleitung 19a verbunden ist. Dieser erste Speicher 17 sammelt Lecköl des Hydraulikmotors 7 und führt es nach der Beendigung des Sägevorganges in die erste Hydraulikleitung 19a zurück.

Um ein Falschlaufen des Hydraulikmotors 7 bei Druckbeaufschlagung der ersten Hydraulikleitung 19a zu verhindern ist ein sechstes Hydraulikventil 16 vorgesehen, das eingangsseitig mit der ersten Hydraulikleitung 19a und ausgangsseitig mit dem Hydraulikmotor 7 verbunden ist, wobei das sechste Hydraulikventil 16 ausgelegt ist um Hydraulikmittel vom Hydraulikmotor 7 in die erste Hydraulikleitung 19a zu leiten und in Gegenrichtung zu sperren.

Des Weiteren ist ein zweiter Speicher 18 für Hydraulikmittel des zweiten Hydraulikzylinders 8 zur rückstellenden Bewegung des zweiten Hydraulikzylinders 8 vorgesehen. Mithilfe des zweiten Speichers 18 wird somit das Schneidelement 6 nach Beendigung des Schneidvorganges wieder eingeschwenkt.

Mithilfe der Erfindung wird eine Vorrichtung zur Holzernte mit einem hydraulisch gesteuerten Fällkopf 1 verwirklicht, der eine Festlegung der Schneidstellung der Greifer- und Sägeeinheit während der Positionierung am Erntegut 2 ermöglicht.

## Patentansprüche

1. Vorrichtung zur Holzernte mit einem hydraulisch gesteuerten Fällkopf (1), der am Auslegerarm eines Fahrzeuges (3) befestigbar ist und eine Greifer- und Sägeeinheit sowie eine Kippvorrichtung (9) umfasst, wobei die Greifer- und Sägeeinheit zumindest ein durch einen ersten Hydraulikzylinder (5) betätigbares Greiferpaar zweier zwischen einem Öffnungs- und Schließzustand schwenkbarer Greiferarme (4) für Erntegut (2) und ein durch einen zweiten Hydraulikzylinder (8) ausschwenkbares Schneidelement (6) zum Durchtrennen des Ernteguts (2) aufweist, und mithilfe der durch einen dritten Hydraulikzylinder (10) betätigbaren Kippvorrichtung (9) von einer Ablagestellung in eine Schneidstellung für das Erntegut (2) schwenkbar ist, wobei der erste Hydraulikzylinder (5) mit einer ersten Hydraulikleitung (19a) zum Öffnen der Greiferarme (4) sowie mit einer zweiten Hydraulikleitung (19b) zum Schließen der Greiferarme (5) verbunden ist, **dadurch gekennzeichnet, dass** ein erstes mit einem Rückschlagventil versehenes Hydraulikventil (12) vorgesehen ist, das eingangsseitig mit der ersten Hydraulikleitung (19a) verbunden ist, und ausgangsseitig mit einem zweiten Hydraulikventil (13) verbunden ist, das mit dem als einfachwirkender Hydraulikzylinder ausgeführten, dritten Hydraulikzylinder (10) verbunden ist, sowie mit einem dritten Hydraulikventil (14), über das das zweite Hydraulikventil (13) mit der ersten Hydraulikleitung (19a) verbunden ist, wobei das dritte Hydraulikventil (14) ausgelegt ist um bei Druckbeaufschlagung der ersten Hydraulikleitung (19a) zu sperren und bei Druckbeaufschlagung der zweiten Hydraulikleitung (19b) zu öffnen, und das zweite Hydraulikventil (13) ausgelegt ist um bei Betätigung eines Schalters durch die in ihren Öffnungszustand geschwenkten Greiferarme (4) Hydraulikmittel vom ersten Hydraulikventil (12) zum dritten Hydraulikzylinder (10) zu leiten, und bei fehlender Betätigung des Schalters beim Schließen der Greiferarme (4) Hydraulikmittel vom dritten Hydraulikzylinder (10) zum dritten Hydraulikventil (14) zu leiten.

2. Vorrichtung nach Anspruch 1, **dadurch gekennzeichnet, dass** das erste Hydraulikventil (12) ausgelegt ist um bei Überschreiten eines ersten Grenzwertes der ausgangsseitigen Druckbeaufschlagung Hydraulikmittel vom zweiten Hydraulikventil (13) zur ersten Hydraulikleitung (19a) zu leiten.

3. Vorrichtung nach Anspruch 1 oder 2, **dadurch gekennzeichnet, dass** ein viertes Hydraulikventil (15) als Lasthalteventil mit einer Überlastsicherung vorgesehen ist, das eingangsseitig mit der zweiten Hydraulikleitung (19b) und ausgangsseitig mit dem ersten Hydraulikzylinder (5) verbunden ist, wobei das vierte Hydraulikventil (15) ausgelegt ist um bei Überschreiten eines zweiten Grenzwertes der ausgangsseitigen Druckbeaufschlagung Hydraulikmittel vom ersten Hydraulikzylinder (5) zur zweiten Hydraulikleitung (19b) zu leiten.

4. Vorrichtung nach einem der Ansprüche 1 bis 3, **dadurch gekennzeichnet, dass** ein fünftes Hydraulikventil (11) vorgesehen ist, das eingangsseitig mit der zweiten Hydraulikleitung (19b) und ausgangsseitig mit einem Hydraulikmotor (7) und dem zweiten Hydraulikzylinder (8) für das Schneidelement (6) verbunden ist, wobei das fünfte Hydraulikventil (11) ausgelegt ist um bei Überschreiten eines dritten Grenzwertes der eingangsseitigen Druckbeaufschlagung Hydraulikmittel von der zweiten Hydraulikleitung (19b) zum Hydraulikmotor (7) und dem zweiten Hydraulikzylinder (8) zu leiten.

5. Vorrichtung nach einem der Ansprüche 1 bis 4, **dadurch gekennzeichnet, dass** ein erster Speicher (17) für Lecköl des Hydraulikmotors (7) vorgesehen ist, der mit der ersten Hydraulikleitung (19a) verbunden ist.

6. Vorrichtung nach einem der Ansprüche 1 bis 5, **dadurch gekennzeichnet, dass** ein sechstes Hydraulikventil (16) vorgesehen ist, das eingangsseitig mit der ersten Hydraulikleitung (19a) und ausgangsseitig mit dem Hydraulikmotor (7) verbunden ist, wobei das sechste Hydraulikventil (16) ausgelegt ist um Hydraulikmittel vom Hydraulikmotor (7) in die erste Hydraulikleitung (19a) zu leiten und in Gegenrichtung zu sperren.

7. Vorrichtung nach einem der Ansprüche 1 bis 6, **dadurch gekennzeichnet, dass** ein zweiter Speicher (18) für Hydraulikmittel des zweiten Hydraulikzylinders (8) zur rückstellenden Bewegung des zweiten Hydraulikzylinders (8) vorgesehen ist.

## Claims

1. Device for timber harvesting having a hydraulically controlled felling head (1), which can be attached to the boom arm of a vehicle (3) and comprises a gripper and saw unit and a tilting device (9), wherein the gripper and saw unit has at least one pair of two gripper arms (4) for the harvested material (2), which can be actuated by a first hydraulic cylinder (5) and pivoted between an open and closed state, and a cutting element (6) for cutting through the harvested material (2), which can be pivoted out by a second hydraulic cylinder (8), and can be pivoted from a depositing position into a cutting position for the harvested material (2) by means of the tilting device (9) which can be actuated by a third hydraulic cylinder (10), wherein the first hydraulic cylinder (5) is connected to a first hydraulic line (19a) for opening the gripper arms (4) and to a second hydraulic line (19b) for closing the gripper arms (5), **characterized in that** a first hydraulic valve (12) provided with a non-return valve is provided, which is connected on the input side to the first hydraulic line (19a), and is connected on the output side to a second hydraulic valve (13), which is connected to the third hydraulic cylinder (10) designed as a single-acting hydraulic cylinder, and to a third hydraulic valve (14), via which the second hydraulic valve (13) is connected to the first hydraulic line (19a), wherein the third hydraulic valve (14) is designed to block when pressure is applied to the first hydraulic line (19a) and to open when pressure is applied to the second hydraulic line (19b), and the second hydraulic valve (13) is designed to conduct hydraulic fluid from the first hydraulic valve (12) to the third hydraulic cylinder (10) when a switch is actuated by the gripper arms (4) pivoted into their open state, and to conduct hydraulic fluid from the third hydraulic cylinder (10) to the third hydraulic valve (14) when the switch is not actuated when the gripper arms (4) are closed.

2. Device according to claim 1, **characterized in that** the first hydraulic valve (12) is designed to conduct hydraulic fluid from the second hydraulic valve (13) to the first hydraulic line (19a) when a first limit value of the output-side pressurization is exceeded.

3. Device according to claim 1 or 2, **characterized in that** a fourth hydraulic valve (15) is provided as a load-holding valve with an overload protection, which is connected on the input side to the second hydraulic line (19b) and on the output side to the first hydraulic cylinder (5), wherein the fourth hydraulic valve (15) is designed to conduct hydraulic fluid from the first hydraulic cylinder (5) to the second hydraulic line (19b) when a second limit value of the output-side pressurization is exceeded.

4. Device according to one of claims 1 to 3, **characterized in that** a fifth hydraulic valve (11) is provided, which is connected on the input side to the second hydraulic line (19b) and on the output side to a hydraulic motor (7) and the second hydraulic cylinder (8) for the cutting element (6), wherein the fifth hydraulic valve (11) is designed to conduct hydraulic fluid from the second hydraulic line (19b) to the hydraulic motor (7) and the second hydraulic cylinder (8) when a third limit value of the input-side pressurization is exceeded.

5. Device according to one of claims 1 to 4, **characterized in that** a first accumulator (17) for leakage oil of the hydraulic motor (7) is provided, which is connected to the first hydraulic line (19a).

6. Device according to one of claims 1 to 5, **characterized in that** a sixth hydraulic valve (16) is provided, which is connected on the input side to the first hydraulic line (19a) and on the output side to the hydraulic motor (7), wherein the sixth hydraulic valve (16) is designed to conduct hydraulic fluid from the hydraulic motor (7) into the first hydraulic line (19a) and to block it in the opposite direction.

7. Device according to one of claims 1 to 6, **characterized in that** a second accumulator (18) for hydraulic fluid of the second hydraulic cylinder (8) is provided for resetting movement of the second hydraulic cylinder (8).

## Revendications

1. Dispositif pour la récolte de bois avec une tête d'abattage (1) à commande hydraulique, qui peut être fixée sur la flèche d'un véhicule (3) et qui comprend une unité de grappin et de scie ainsi qu'un dispositif basculant (9), l'unité de grappin et de scie comportant au moins une paire de grappins pouvant être actionnée par un premier vérin hydraulique (5), formée de deux mors de grappin (4) pour la matière récoltée (2) pouvant pivoter dans un état ouvert et un état fermé, et un élément de coupe (6) qui peut être déployé par un deuxième vérin hydraulique (8) pour découper la matière récoltée (2) et qui peut basculer à l'aide du dispositif basculant (9) actionnable au moyen d'un troisième vérin hydraulique (10) d'une position escamotée à une position de coupe pour la matière récoltée (2), le premier vérin hydraulique (5) communiquant avec une première conduite hydraulique (19a) pour ouvrir les mors de grappin (4) ainsi qu'avec une deuxième conduite hydraulique (19b) pour fermer les mors de grappin (5), **caractérisé en ce qu'**est prévue une première soupape hydraulique (12) munie d'un clapet antiretour, qui communique du côté de l'entrée avec la première conduite hydraulique (19a) et qui communique du côté de la sortie avec une deuxième soupape hydraulique (13) communiquant avec un troisième vérin hydraulique (10) réalisé comme un vérin hydraulique à simple effet, ainsi qu'avec une troisième soupape hydraulique (14) par l'intermédiaire de laquelle la deuxième soupape hydraulique (13) communique avec la première conduite hydraulique (19a), la troisième soupape hydraulique (14) étant conçue pour se fermer quand une pression est présente dans la première conduite hydraulique (19a) et pour s'ouvrir quand une pression est présente dans la deuxième conduite hydraulique (19b), et la deuxième soupape hydraulique (13) est conçue pour acheminer du fluide hydraulique de la première soupape hydraulique (12) au troisième vérin hydraulique (10) lors de l'actionnement d'un commutateur par le mors de grappin (4) basculé dans son état ouvert et pour acheminer du fluide hydraulique du troisième vérin hydraulique (10) à la troisième soupape hydraulique (14) quand le commutateur n'est pas actionné lors de la fermeture du mors de grappin (4).

2. Dispositif selon la revendication 1, **caractérisé en ce que** la première soupape hydraulique (12) est conçue pour acheminer du fluide hydraulique de la deuxième soupape hydraulique (13) à la première conduite hydraulique (19a) quand une première limite de la pression présente à la sortie est dépassée.

3. Dispositif selon la revendication 1 ou 2, **caractérisé en ce qu'**une quatrième soupape hydraulique (15) est prévue pour servir de soupape de maintien de la charge avec une sécurité contre la surcharge, qui communique du côté de l'entrée avec la deuxième conduite hydraulique (19b) et du côté de la sortie avec le premier vérin hydraulique (5), la quatrième soupape hydraulique (15) étant conçue pour acheminer du fluide hydraulique du premier vérin hydraulique (5) à la deuxième conduite hydraulique (19b) quand une deuxième limite de la pression présente à la sortie est dépassée.

4. Dispositif selon l'une des revendications 1 à 3, **caractérisé en ce qu'**est prévue une cinquième soupape hydraulique (11) qui communique du côté de l'entrée avec la deuxième conduite hydraulique (19b) et du côté de la sortie avec un moteur hydraulique (7) et avec le deuxième vérin hydraulique (8) pour l'élément de coupe (6), la cinquième soupape hydraulique (11) étant conçue pour acheminer du fluide hydraulique de la deuxième conduite hydraulique (19b) au moteur hydraulique (7) et au deuxième vérin hydraulique (8) quand une troisième limite de la pression présente à l'entrée est dépassée.

5. Dispositif selon l'une des revendications 1 à 4, **caractérisé en ce qu'**est prévu un premier accumulateur (17) pour les fuites d'huile du moteur hydraulique (7), qui communique avec la première conduite hydraulique (19a).

6. Dispositif selon l'une des revendications 1 à 5, **caractérisé en ce qu'**est prévue une sixième soupape hydraulique (16) qui communique du côté de l'entrée avec la première conduite hydraulique (19a) et du côté de la sortie avec le moteur hydraulique (7), la sixième soupape hydraulique (16) étant conçue pour acheminer du fluide hydraulique du moteur hydraulique (7) à la première conduite hydraulique (19a) et pour se fermer en sens inverse.

7. Dispositif selon l'une des revendications 1 à 6, **caractérisé en ce qu'**un deuxième accumulateur (18) est prévu pour le fluide hydraulique du deuxième vérin hydraulique (8) pour le mouvement de retour du deuxième vérin hydraulique (8).
